# EUROPEAN PATENT APPLICATION

(11) **EP 2 648 002 A1**
(43) Date of publication of application: **09.10.2013**
(21) Application number: 12002408.8
(22) Date of filing: 03.04.2012
(51) Int. Cl.: G01P 3/66, A63B 69/18

(54) **Ski jumping equipment and facility as well as ski jumping system and method for displaying a ski jump**

(71) Applicant: win.air Sportartikel GmbH, 83737 Irschenberg (DE)
(72) Inventor: Kettunen, Lauri, FI-36100 Kangasala AS (FI); Nieminen, Tuuka, FI - 37560 Lempääiä (FI); Olli, Särkkä, FI- 33720 Tampere (FI)
(74) Representative: Reuther, Martin

(57) **Abstract**

A ski jumping equipment, a ski jumping facility as well as a ski jumping system and a method for displaying a ski jump shall have improved information about the conditions under which this ski jump happens. Therefore, at least two speed measuring means and a displaying of speed and/or velocity of a ski jumper while skiing down the inrun are provided.

## Description

The present invention relates to a ski jumping equipment, a ski jumping facility as well as a ski jumping system and a method for displaying a ski jump.

Ski jumping facilities are commonly well known, especially since corresponding events are broadcasted to the public. Such ski jumping facilities comprise a ski jump with an inrun, with a gate at the beginning of said inrun and with a jump-off platform or table at the end of said inrun and a hill presenting a landing slope with a landing area and an outrun whereby said ski jump is placed at the hill so that ski jumpers may start at the gate, ski down the inrun, jump off at the jump-off platform and jump down the hill to the landing area.

Ski jumpers are equipped with a corresponding equipment, like jumping skies with a corresponding binding and corresponding shoes, a ski jumping suite and/or a helmet or the like to provide for a safe and far jump.

While accelerating from the gate to the jump-off platform, the speed at the jump-off is measured with two photo sensors at common ski jump facilities, whereby the speed follows out of the distance between those two photo sensors divided by the time between the passage through those photo sensors.

Whereas, of course, the speed at the jump-off platform is one major aspect influencing the width of such a jump, a lot of additional aspects like the jumping movement itself and the exact point at which the jump is done or the posture during the flying phase, are of importance as well.

It is an object of this invention to provide a ski jumping equipment, a ski jumping facility and/or a ski jumping system including a ski jumping equipment and a ski jumping facility as well as a method for displaying a ski jump with improved information about the conditions under which this ski jump happens.

This object is achieved by a ski jumping system comprising a ski jumping facility and a ski jumping equipment for ski jumper including means for measuring the speed of said ski jumper, and being characterized in that said speed measuring means comprise at least two speed measurements.

Such a ski jumping system will provide improved information about the ski jump itself. For example, the average speed over the whole inrun - and not only the speed at the end of this inrun at the jump-off platform as it is known in the state of art - may be used to characterize such a ski jump. At a first glance, the average speed might not provide additional information in comparison to the speed on the jump-off platform. However, the combination of average speed and speed at the jump-off platform allows a positive guess with respect to the acceleration on the inrun which is influencing the width of the jump, too.

Correspondingly, the aforementioned object is achieved by a method for displaying a ski jump comprising an inrun and being characterized by displaying for speed and/or velocity of a ski jumper while skiing down the inrun. this solution differs from the state of art which is providing for only one speed measurement at the end of the inrun, and not during the inrun.

In respect of this invention, velocity is the rate of change in position and a vector valued function which has as many components as the dimension of space, namely three dimensions. The speed is the norm of velocity.

This method will not only provide the speed of a ski jumper at the edge of the jump-off platform, but the speed while skiing down the inrun. This leads to much better or improved information as it is explained already above. The display for speed and/or velocity may display said speed and/or velocity as speed and/or velocity data over time, position or online. Therefore, speed and/or velocity data are a number of speeds or velocities being measured while a ski jumper is skiing down the inrun. Such velocity data might be displayed as a time parameterized trajectory of a moving object or as a trajectory equipped with velocity and/or speed of the ski jumper who is moving or who has moved along the inrun. Alternatively, the speed or velocity may be displayed online while the ski jumper is skiing down the inrun. The latter will provide direct information about the speed for any visitors or trainers.

Of course, it is possible to store the corresponding data in storing means for storing the sensed speed. This enables a direct comparison between different jumps and different ski jumpers.

As it was explained above, already two speed measurements will provide for significantly improved information. However, the speed measuring means might measure the speed along the ski jump in more detail. This might be realized by more than two speed measurements up to a nearly continuous or continuous speed measurement by a large number of single speed measurements, or even by interpreting images of cameras.

In detail, the object of the invention may be achieved by a ski jumping facility or a ski jumping equipment being characterized by at least one means for sensing a passage of sensor field and/or means for generating a sensor field. Especially, the object of this invention is achieved by a ski jumping system including a ski jumping facility with a first of said sensing means and said generating means, and a ski jumping equipment with the second of said sensing means and generating means.

Contrary to the use of photo sensors, the use of a sensor field leads to more precise speed measurements since any changes of posture of the ski jumper while passing the speed measuring means will not influence the measurement as it might happen with the use of photo sensors. Additionally, the use of generating means for generating a sensor field and of corresponding sensing means leads to a cheaper embodiment in comparison to ski jumping facilities with a corresponding number of photo sensors and corresponding light emitting sources, or a computer system analyzing the pictures of video cameras. Especially with respect to the latter, it is to be emphasized that ordinary video cameras take 25 or 50 frames per second so that an athlete moves 0.5m to 1 m between each frame even with a shutter speed of 1/1000s or 1/2000s. An athlete moves more than 1.25cm during one frame. In order to achieve a speed out of the picture of cameras in time, very costly systems are needed.

A cheap embodiment of the ski jumping facility or a ski jumping equipment may be realized if said sensor field generating means are generating a magnetic and/or electric field.

Correspondingly, the sensing means might sense a change of a magnetic and/or electric field.

Upon relative movement of the sensing means and the generating means with respect to each other, a signal is generated by said sensing means which either directly corresponds to the speed with which the both means move relatively to each other, or which might be used for a creation of time stamps when a ski jumper is passing a corresponding sensing means or generating means.

Preferably, the field is a constant magnetic and/or electric field. In so far the sensing means sense a change of a magnetic and/or electric field, a passage of a sensor field generating means generating a constant magnetic and/or electric field can be sensed as a change of the magnetic and/or electric field in the vicinity of the sensor.

A very cheap solution may be realized by a magnet as generating means, and a corresponding magnetic sensor.

Obviously, it is possible to provide the generating means at the ski jumping equipment of a ski jumper, for example at the ski, whereas the sensing means are provided at the ski jumping facilities. Alternatively, the sensor field generating means might be provided at the ski jumping facility, whereas the ski jumper is carrying the corresponding sensing means.

Usually, one single sensing means or one single generating means will be attached to the ski jumping equipment, whereas a number of corresponding sensing means or sensor field generating means will be placed at the ski jumping facility. On one hand, it is possible to place only two such sensing means or generating means, one at the gate of the inrun for example and another at the edge of the inrun, at the ski jumping facility. On the other hand, hundreds of sensing means or generating means may be placed next to another in order to achieve nearly constant speed measurements. A reasonable compromise seems to place said sensing means or generating means at distances of about 10 cm close to the jumping platform or inrun table. In the inrun curve, the sensing means or generating means could be placed between 20 cm and 50 cm from each other, whereas in the linear part of the inrun, the sensing means or generating means could be placed about 1 m from each other.

The displayed speed or velocity may be broadcasted while broadcasting a ski jump, especially while showing said ski jump on television. This should improve the information being presented to any viewer and could lead to a higher thrill and corresponding higher acceptance while watching ski jumping on television.

In the contents of this description the term "ski jumping" comprises ski flying, too.

Obviously, the features of the aforementioned solutions or of the solutions mentioned in the independent claims may be combined to achieve the corresponding advantages cumulatively.

Additional advantages, objects, aims and properties of the present invention will be explained in the following description of embodiments being especially shown in the drawings. In the drawings:
Figure 1 is a schematic side view of a first ski jumping facility; and
Figure 2 is a schematic side view of a second ski jumping facility.

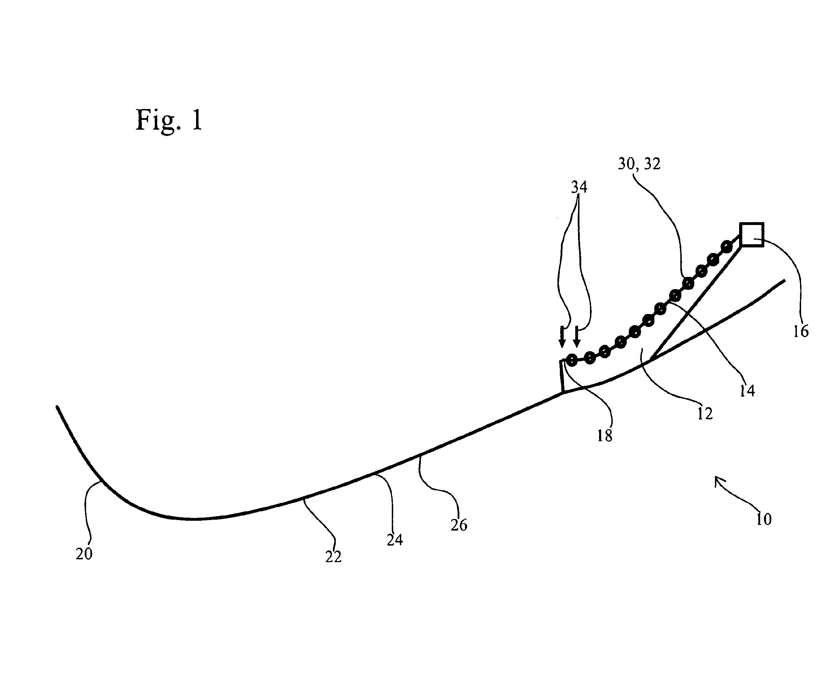

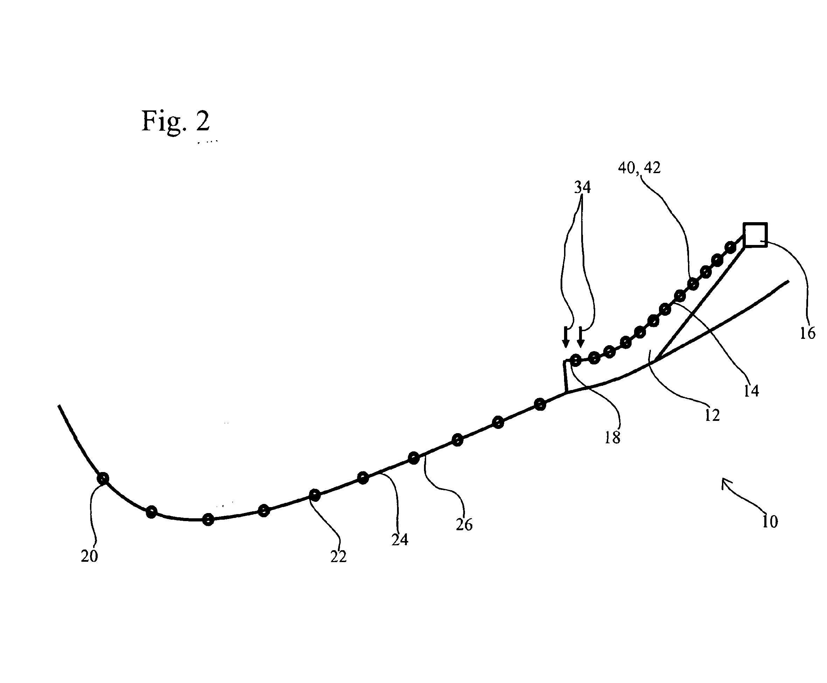

The ski jumping facility 10 of figures 1 and 2 comprise a ski jump 12 with an inrun 14 being placed on a hill having a landing slope 26 and an outrun 20. Each ski jumping facility 10 is characterized by its hill size point 22 and its critical point 24 whereby the critical point is defined by the steepest point of the landing slope.

The ski jump 12 itself comprises an inrun 14 following a gate 16 and leading to a jump off-platform 18.

At the jump-off platform 18, a pair of photo sensors 34 is able to measure the speed of a ski jumper.

The ski jumping facility 10 according to figure 1 has a number of sensing means 30 whereby this sensing means 30 are made up by sensors 32 being able to detect a passage of a magnet which magnet is carried by a ski jumper with his ski jumping equipment. Preferably, the magnet is placed on a ski of the ski jumper.

While skiing down the inrun, the magnet as a sensor field generating means generating a constant magnetic field, passes each sensor 32, leading to signals which are used to create time stamps of when the ski jumper has passed by each sensor 32. When the difference in position of two sensors 32 is dived by the difference in time between two corresponding time stamps, the average velocities of the ski jumper between the sensors 32 is specified.

This velocities or corresponding speeds may be displaced directly online. Further, it is possible to create velocity and/or speed data, i.e. a time parametrized trajectory of the ski jumper or a trajectory equipped with velocity and/or speed, by the use of well known interpolation techniques.

Of course, it is possible to place the sensing means 30 at equidistant positions along the inrun 14. However, it is also possible to vary the distances. For example, the sensing means 30 may be spaced about 10 cm from each other in the area of the jump-off platform 18. In the inrun curve, the sensing means 30 may be spaced between 20 cm and 50 cm from each other. In the linear part of the inrun 14, the distance might be I m.

The ski jumping facility 10 according to figure 2 comprises a huge number of sensor field generating means 40 in the form of magnets 42 which are placed along the inrun 14 and along the landing slope 26 and the outrun 20. A ski jumper is carrying a corresponding sensing means at his ski jumping equipment transmitting a time stamp wirelessly when passing any of the generating means 40. The time stamps may be used to create velocity data or speed data as it was explained already.

Since magnets are fairly cheap, the density of the generating means 40 may be very high. Correspondingly, the generating means 40 are placed with a distance of 5 cm along the inrun whereas the distance of the generating means 40 is 1 m on the landing slope 26 and the outrun 20. In this area, the generating means 40 are placed in two dimensions, in jumping direction and perpendicular thereto.

The generating means 40 at the landing slope 26 and the outrun 20 may be omitted, if not necessary. Further, the photo sensors 34 may be omitted.

In alternative embodiments, it is possible to measure the velocity directly if the sensing means or the sensor field are chosen accordingly. For example, it is possible to use a Doppler effect or some inductive effects for direct speed measurement.

### List of Reference Numbers:

- 10: ski jumping facility
- 12: ski jump
- 14: inrun
- 16: gate
- 18: jump-off platform
- 20: outrun
- 22: hill size point
- 24: critical point
- 26: landing slope
- 30: sensing means
- 32: sensor
- 34: photo sensor
- 40: generating means
- 42: magnet

## Claims

1. Ski jumping facility (10) or ski jumping equipment, **characterized by** at least one means (30) for sensing a passage of a sensor field and/or means (40) for generating a sensor field.

2. Ski jumping facility (10) or ski jumping equipment according to claim 1, **characterized in that** said sensor field generating means (40) generating a magnetic and/or electric field.

3. Ski jumping facility or ski jumping equipment according to claim 1 or 2, **characterized in that** said sensing means (30) sensing a change of a magnetic and/or electric field.

4. Ski jumping facility or ski jumping equipment according to claim 2 or 3, **characterized in that** said field is a constant magnetic and/or electric field.

5. Ski jumping system comprising a ski jumping facility (10) and a ski jumping equipment for a ski jumper including means for measuring the speed of said ski jumper, **characterized in that** said speed measuring means comprise at least two speed measurements.

6. Ski jumping system according to claim 5, **characterized in that** said speed measuring means measure the speed along the ski jump.

7. Ski jumping system according to claim 5 or 6 with a ski jumping facility and/or with a ski jumping equipment according to anyone of claims 1 to 4.

8. Ski jumping facility or ski jumping equipment according to anyone of claims 1 to 4 or ski jumping system according to anyone of claims 5 to 7, **characterized by** storing means for storing said sensed speed.

9. Method for displaying a ski jump comprising an inrun (14), **characterized by** displaying speed and/or velocity of a ski jumper while skiing down the inrun (14).

10. Method according to claim 9, **characterized in that** said display for speed and/or velocity displays said speed and/or velocity data over time, position or online.
